# EUROPEAN PATENT APPLICATION

(11) **EP 4 796 891 A1**
(43) Date of publication of application: **26.08.2026**
(21) Application number: 26159747.0
(22) Date of filing: 20.02.2026
(51) Int. Cl.: G01B 3/102, G01B 3/1041, B65H 75/44, F16D 57/00

(54) **MEASURING TAPE FOR PROTECTING END HOOK**

(30) Priority: 25.02.2025 KR 20250024019
(71) Applicant: Komelon Corporation, Busan 49484 (KR)
(72) Inventor: KANG, Dong Hun, 48091 Busan (KR); KANG, Nam Hoon, 48118 Busan (KR)
(74) Representative: Bottino, Giovanni

(57) **Abstract**

A measuring tape including a housing, a blade wound extended to the outside or elastically retracted though an entrance of the housing, and a hook mounted at an end of the blade includes a rubber coating layer configured to cover a portion of an outer surface of the housing, wherein a rubber buffer block is formed around the entrance of the housing integrally with the rubber coating layer, and the rubber buffer block includes a protruding convex portion configured to support an inner surface of the hook and a hollow air pocket formed inside the convex portion.

## Description

### BACKGROUND

### Technical Field

The present disclosure relates to a measuring tape, and more particularly, to a measuring tape that can protect a hook while also mitigating impact that is generated when the hook collides with a housing.

### Description of the Related Art

A general measuring tape includes a housing, a reel elastically supported inside the housing, a blade wound in a coil shape around the reel, and an end hook coupled to an end of the blade. A user pulls out the blade from the end to which the end hook is coupled for measurement, and can measure the length or distance of an object by extending it to a desired length.

A measuring tape, which is a tool widely used to measure a length, is used for various purposes in construction, furniture manufacturing, industry, and homes. The hook of the blade is always exposed to the outside, and can be extended from the housing and fixed to an external environment. Further, since the hook is installed at an end of the blade and serves as a reference for measuring a length, if the hook is damaged, it may significantly affect measurement accuracy of the measuring tape.

Further, impact that is generated when the blade of the measuring tape is rapidly rewound and the hook collides with the housing is directly transmitted to the hook or the body of the measuring tape. As a result, the hook may be damaged or unpleasant impact may be given to a user holding the measuring tape.

To prevent this, U.S. Patent No. 6,161,299 (registered Dec. 19, 2000) discloses absorbing impact by forming a saddle piece at an end of a rapid brake device made of plastic. Since the rapid brake device must be separately formed of plastic and must be separately assembled, a problem that the corresponding part is detached may occur.

Korean Patent No. 10-0940780 (registered Jan. 29, 2010) also discloses a shock-absorbing device for mitigating impact caused by a hook. This shock-absorbing device forms a U-shaped bridge structure at the entrance of a housing so that, when the hook collides, the shock-absorbing device rotates about a hinge and an elastic member protruding rearward in a tongue shape supports the shock absorbing device that is lifted, whereby it is possible to absorb impact. This also is not free from the risks of damage and detachment because the shock-absorbing device is assembled to the housing of the measuring tape and operated through a complicated mechanism.

### SUMMARY

An objective of the present disclosure is to provide a measuring tape that can protect a hook from a drop accident of the measuring tape or rapid rewinding of a blade and can effectively absorb impact.

An objective of the present disclosure is to provide a measuring tape that can implement hook protection and impact absorption and can solve the risks of durability and detachment of the measuring tape.

According to an exemplary embodiment of the present disclosure, a measuring tape including a housing, a blade configured to be drawn out through an entrance of the housing and elastically retracted into the housing, and a hook mounted at an end of the blade, wherein the housing includes a rubber coating layer configured to cover a portion of an outer surface thereof, a rubber buffer block is formed around the entrance of the housing integrally with the rubber coating layer, and the rubber buffer block includes a protruding convex portion configured to support an inner surface of the hook and a hollow air pocket formed inside the convex portion.

Even when the measuring tape is dropped and impact is applied to the hook, impact or deformation that is applied to the hook can be cushioned using the air pocket and the convex portion. Further, since the rubber buffer block is integrally molded with the rubber coating layer covering the housing, it is possible to easily form the rubber buffer block at one time and it is also possible to increase integration with the housing.

A recessed portion configured to accommodate the rubber buffer block may be formed at the housing, and the rubber buffer block may be integrally formed with the recessed portion. By forming a space for the rubber buffer block in the housing and filling the recessed portion with the rubber buffer block, impact that is transmitted to the hook can be absorbed over a wide area in the housing.

In order to prevent displacement of the rubber buffer block and improve integration with the housing, a portion of a boundary between the recessed portion and the rubber buffer block may be formed to have irregularities.

The convex portion and the air pocket may be formed in parallel in the rubber buffer block such that a plurality of convex portions support the inner surface of the hook, and a plurality of air pockets may be formed in series to correspond to one convex portion such that cushioning by the air pockets sequentially occurs.

The air pocket may be formed through the rubber buffer block, but they may be provided such that only a portion is open and a portion is closed. When the air pocket is formed through the rubber buffer block, impact can be dispersed in various directions.

According to an exemplary embodiment of the present disclosure for achieving the objectives of the present disclosure described above, a measuring tape including a housing, a blade wound extended to the outside or elastically retracted though an entrance of the housing, and a hook mounted at an end of the blade includes a rubber buffer block provided around an entrance of the housing, and the rubber buffer block includes a hollow air pocket.

As described above, the rubber buffer block may be integrally formed with the rubber coating layer covering the housing, but in some cases, it may be formed separately from the rubber coating layer and may also be provided in a form capable of being assembled later.

Even in this case, the rubber buffer block may include a convex portion protruding in an approach direction of the hook to support the inner surface of the hook, and cushioning using an air pocket can be effectively dispersed.

The convex portion and the air pocket may be arranged to overlap in the approach direction of the hook, and the air pocket may be formed through the rubber buffer block.

The measuring tape of the present disclosure can reduce the possibility of deformation of the hook using the rubber buffer block even in a drop accident of the measuring tape, and impact that is transmitted to the hook can be effectively dispersed using the air pocket and the protrusion.

The measuring tape of the present disclosure can improve protection of the hook and protect the hook by absorbing impact that is applied to the housing entrance due to rapid rewinding of the blade, and can also mitigate impact that is transmitted to a user.

The measuring tape of the present disclosure can implement hook protection and impact absorption while improving durability of the measuring tape, and can fundamentally solve the risk that the rubber buffer block is detached due to excessive impact.

### BRIEF DESCRIPTION OF THE DRAWINGS

FIG. 1A and FIG. 1B are views illustrating the exterior of a measuring tape for protecting a hook according to an embodiment of the present disclosure;
FIG. 2 is a view illustrating a rubber buffer block formed around the entrance of a housing of the measuring tape of FIG. 1;
FIG. 3 is a view illustrating a coupling structure of a housing, a rubber coating layer, and a rubber buffer block of the measuring tape of FIG. 1;
FIG. 4 is a view illustrating a measuring tape for protecting a hook according to an embodiment of the present disclosure;
FIG. 5 is a view illustrating the measuring tape of FIG. 4 with a housing portion C-1 and a rubber coating layer and rubber buffer block portion C-2 shown separately;
FIG. 6 is a view illustrating a measuring tape for protecting a hook according to an embodiment of the present disclosure; and
FIG. 7 is a view illustrating the measuring tape of FIG. 6 with a housing portion D-1 and a rubber coating layer and rubber buffer block portion D-2 shown separately.

### DETAILED DESCRIPTION

Hereinafter, preferred embodiments of the present disclosure will be described in detail with reference to the accompanying drawings, but the present disclosure is not limited or restricted to the embodiments. For reference, the same reference numerals substantially indicate the same components in the description, it is possible to refer to the matters shown in other figures under this rule, and matters that are determined as being apparent or repetitive to those skilled in the art may be omitted.

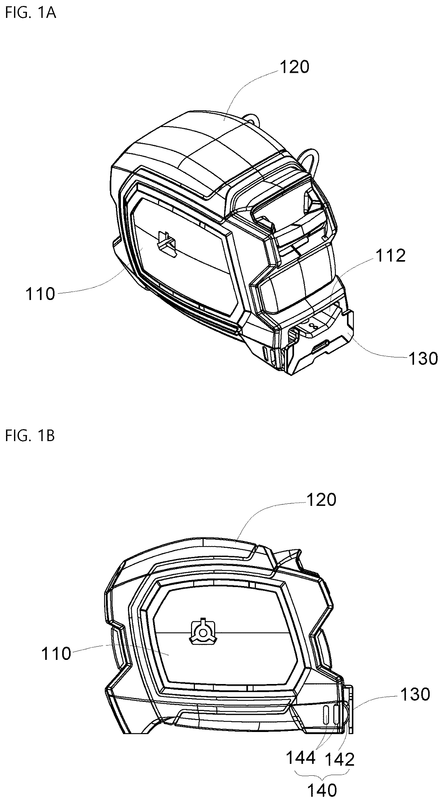

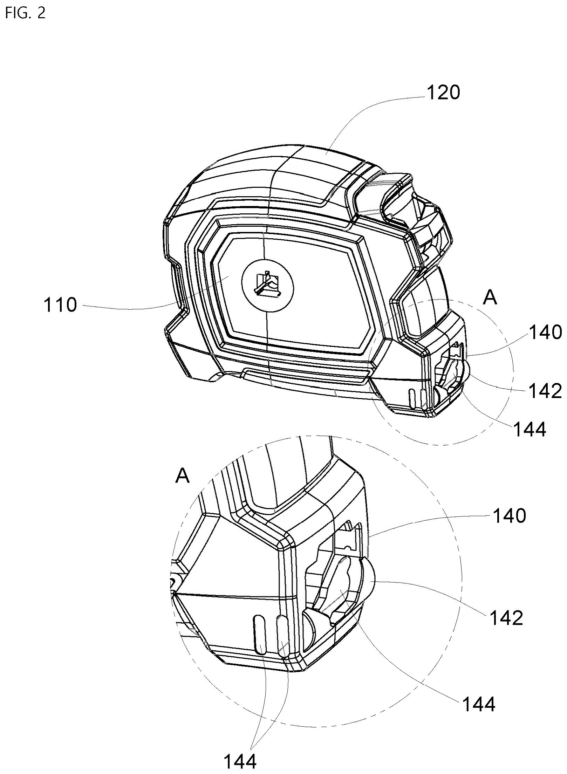

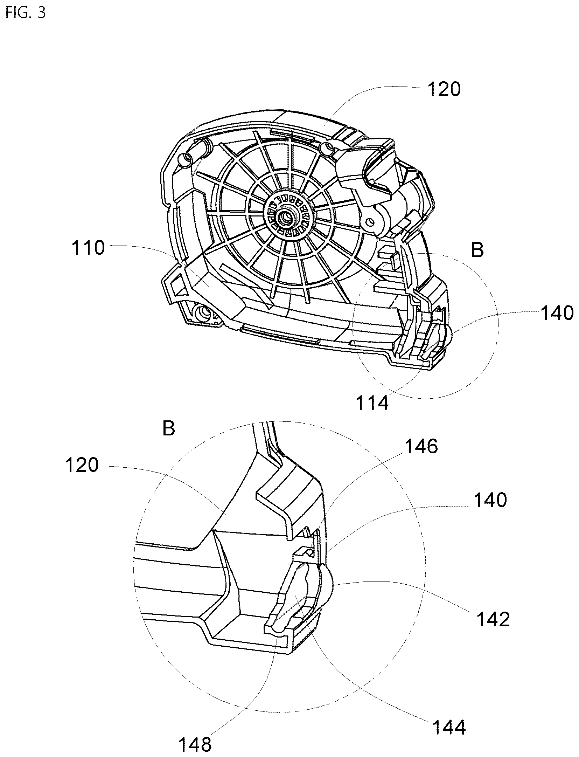

FIG. 1A and FIG. 1B are views illustrating the exterior of a measuring tape for protecting a hook according to an embodiment of the present disclosure, FIG. 2 is a view illustrating a rubber buffer block formed around the entrance of a housing of the measuring tape of FIG. 1, and FIG. 3 is a view illustrating a coupling structure of a housing, a rubber coating layer, and a rubber buffer block of the measuring tape of FIG. 1.

Referring to FIGS. 1 to 3, the measuring tape according to the present embodiment may include a housing 110, a reel accommodated inside the housing 110, a blade wound around the outer surface of the reel and extended or retracted from an entrance 112 of the housing 110, and a hook 130 mounted at an end of the blade.

The housing 110 may be formed by assembling two plastic cases, and the reel and the blade may be accommodated inside the housing 110 around a rotation shaft connecting the cases. The measuring tape may further include a reel around which the blade is wound and a spring accommodated in the reel. For the reel and the spring, the structure of other existing measuring tapes may be referred to.

A rubber coating layer 120 may be integrally formed on the outer surface of the housing 110. The rubber coating layer 120 and the housing 110 may be integrally formed by double injection molding or the like. The rubber coating layer 120 partially protects the outer surface of the housing 110 by partially covering the outer surface of the housing 110 and is exposed at a portion that gripped by a user so that the housing 110 can be stably gripped without slipping from a palm of the user.

The rubber buffer block 140 according to the present embodiment is provided integrally with the rubber coating layer 120 and may be provided around the entrance 112 of the housing 110. The rubber buffer block 140 may include a protruding convex portion 142 for supporting the inner surface of the hook 130 and a hollow air pocket 144 formed inside the convex portion 142.

Since the convex portion 142 and the air pocket 144 of the rubber buffer block 140 support the inner surface of the hook 130, even when the measuring tape is dropped and impact is applied to the hook 130, the rubber buffer block 140 can cushion an impact or deformation applied to the hook 130.

Further, since the rubber buffer block 140 is integrally formed with the rubber coating layer 120 that is integrally formed with the housing 110, the process of forming the rubber buffer block 140 is also simple, and a separate assembly process may not be required.

A recessed portion 114 for accommodating the rubber buffer block 140 may be formed at the housing 110. The air pocket 144 is positioned in the recessed portion 114, and the convex portion 142 is formed on a surface contacting the hook 130, whereby it is possible to disperse and absorb impact that is transmitted from the hook 130 to the housing 110.

Since the rubber buffer block 140 is integrally formed with the housing 110 in the process of forming the rubber coating layer 120, it may also be integrally formed with the recessed portion 114, and by filling the recessed portion 114 with the rubber buffer block 140, impact that is transmitted to the hook 130 can be dispersed in multiple directions and over a wide area in the housing 110.

As shown in FIG. 3, in order to prevent displacement of the rubber buffer block 140 and improve integration with the housing 110, irregularities 146 and 148 may be formed at the boundary between the recessed portion 114 and the rubber buffer block 140.

In the present embodiment, two air pockets 144 are formed in series behind one convex portion 142, and cushioning can sequentially occur from the outer air pocket 144. Further, the air pocket 144 is formed transversely through the rubber buffer block 140.

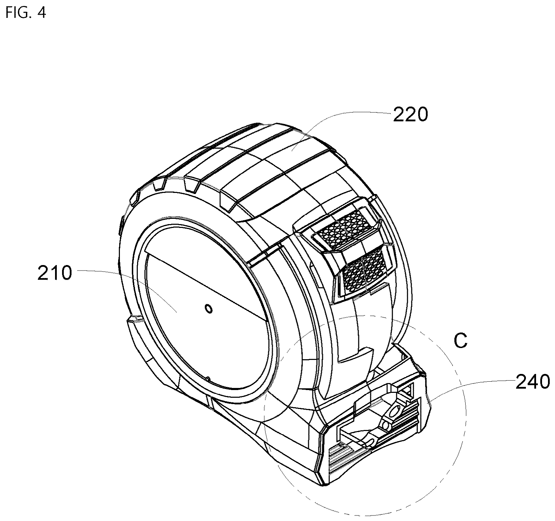

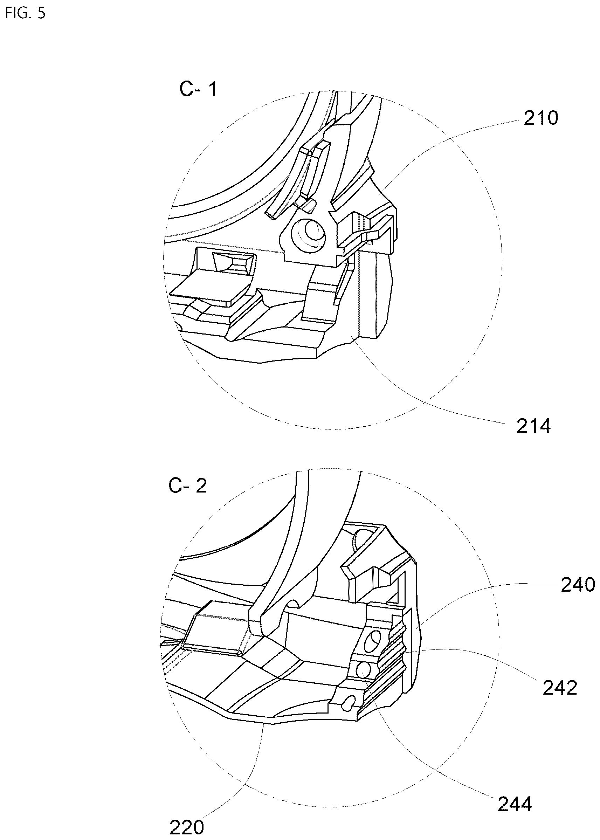

FIG. 4 is a view illustrating a measuring tape for protecting a hook according to an embodiment of the present disclosure and FIG. 5 is a view illustrating the measuring tape of FIG. 4 with a housing portion C-1 and a rubber coating layer and rubber buffer block portion C-2 shown separately.

Referring to FIGS. 4 and 5, a measuring tape according to the present embodiment may include a housing 210, a reel accommodated inside the housing 210, a blade extended or retracted from the entrance of the housing 210, and a hook mounted at an end of the blade.

A rubber coating layer 220 may be integrally formed on the outer surface of the housing 210, and the rubber coating layer 220 and the housing 210 may be integrally formed by double injection molding or the like.

The rubber buffer block 240 is provided integrally with the rubber coating layer 220 and may be provided around the entrance of the housing 210 and in a recessed portion 214. The rubber buffer block 240 may include a plurality of convex portions 242 supporting the inner surface of the hook and a hollow air pocket 244 formed inside each of the convex portions 242.

In the present embodiment, the air pockets 244 are arranged in parallel with the plurality of convex portions 242 and may be aligned side by side in a transverse direction. Since the plurality of convex portions 242 and the air pockets 244 of the rubber buffer block 240 simultaneously support the inner surface of the hook, impact or deformation that is applied to the hook can be effectively cushioned.

Since the rubber buffer block 240 is integrally formed with the housing 210 in the process of forming the rubber coating layer 220, it is integrally formed with the recessed portion 214 and may be positioned therein.

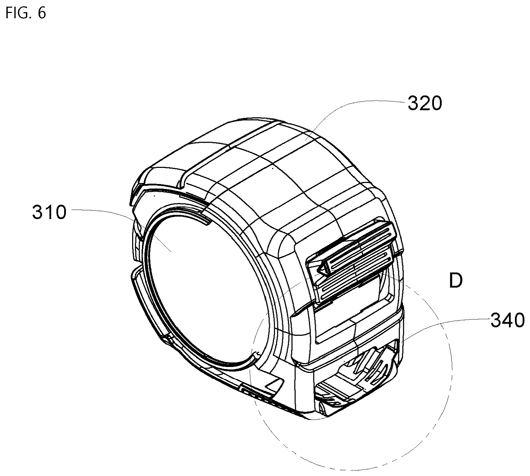

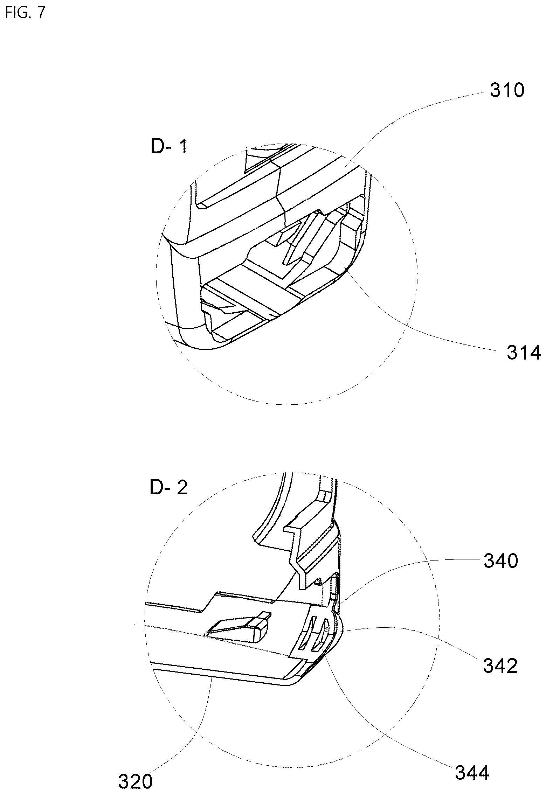

FIG. 6 is a view illustrating a measuring tape for protecting a hook according to an embodiment of the present disclosure and FIG. 7 is a view illustrating the measuring tape of FIG. 6 with a housing portion D-1 and a rubber coating layer and rubber buffer block portion D-2 shown separately.

Referring to FIGS. 6 and 7, a measuring tape according to the present embodiment may include a housing 310, a reel accommodated inside the housing 310, a blade extended or retracted from the entrance of the housing 310, and a hook mounted at an end of the blade.

A rubber coating layer 320 may be integrally formed on the outer surface of the housing 310, and the rubber coating layer 320 and the housing 310 may be integrally formed by double injection molding or the like.

The rubber buffer block 340 is provided integrally with the rubber coating layer 320 and may be provided around the entrance of the housing 310 and in a recessed portion 314. The convex portion 342 and the air pocket 344 of the rubber buffer block 340 may be provided in a form in which one side is open and the other side is closed, and they may also be formed in various shapes such as a triangular shape rather than a straight line.

Since the rubber buffer block 340 is integrally formed with the housing 310 in the process of forming the rubber coating layer 320, it is integrally formed with the recessed portion 314 and may be positioned therein.

In the foregoing description, the rubber buffer block may be integrally formed with the rubber coating layer covering the housing, but in some cases, it may be formed separately from the rubber coating layer and may also be provided in a form capable of being assembled to the housing later.

Even in this case, the rubber buffer block may include a convex portion protruding in an approach direction of the hook to support the inner surface of the hook, and cushioning using an air pocket can be effectively dispersed.

Although exemplary embodiments of the present disclosure were described above with reference to the drawings, those skilled in the art could understand that the present disclosure may be changed and modified in various ways without departing from the spirit and scope of the present disclosure described in claims.

## Claims

1. A measuring tape for protecting an end hook comprising a housing, a blade configured to be drawn out through an entrance of the housing and elastically retracted into the housing, and a hook mounted at an end of the blade,
wherein the housing includes a rubber coating layer configured to cover a portion of an outer surface of the housing,
a rubber buffer block is formed around the entrance of the housing integrally with the rubber coating layer, and
the rubber buffer block includes a protruding convex portion configured to support an inner surface of the hook and a hollow air pocket formed inside the convex portion.

2. The measuring tape of claim 1, wherein a recessed portion configured to accommodate the rubber buffer block is formed at the housing, and the rubber buffer block is integrally formed with the recessed portion.

3. The measuring tape of claim 2, wherein a portion of a boundary between the recessed portion and the rubber buffer block includes interlocking irregularities.

4. The measuring tape of claim 1, wherein the convex portion and the air pocket are formed in parallel in the rubber buffer block, and a plurality of convex portions support the inner surface of the hook.

5. The measuring tape of claim 1, wherein a plurality of air pockets are formed in series to correspond to one convex portion, whereby cushioning action is sequentially provided by the air pockets.

6. The measuring tape of claim 1, wherein the air pocket extends through the rubber buffer block.

7. A measuring tape for protecting an end hook comprising a housing, a blade wound extended to the outside or elastically retracted though an entrance of the housing, and a hook mounted at an end of the blade,
wherein the housing includes a rubber buffer block provided around an entrance of the housing, and
the rubber buffer block includes a hollow air pocket.

8. The measuring tape of claim 7, wherein the rubber buffer block includes a convex portion protruding in a direction in which the hook approaches to support an inner surface of the hook.

9. The measuring tape of claim 8, wherein the convex portion and the air pocket are arranged to overlap in the approach direction of the hook.

10. The measuring tape of claim 7, wherein the air pocket extends through the rubber buffer block.
